# EUROPEAN PATENT SPECIFICATION

(11) **EP 1 602 228 B1**
(45) Date of publication and mention of the grant of the patent: **04.05.2016**
(21) Application number: 04719239.8
(22) Date of filing: 10.03.2004
(51) Int. Cl.: H04N 5/913

(54) **CONTENT PROTECTION FOR DIGITAL RECORDING**
INHALTSSCHUTZ FÜR DIGITALE AUFNAHME
PROTECTION D'UN CONTENU POUR ENREGISTREMENT NUMERIQUE

(30) Priority: 11.03.2003 US 453764 P; 11.03.2003 US 453662 P
(43) Date of publication of application: 07.12.2005
(73) Proprietor: Thomson Licensing, 92130 Issy-les-Moulineaux (FR)
(72) Inventor: LANKFORD, Douglas, Edward, Carmel, IN 46033 (US); WEHMEYER, Keith, Reynolds, Fishers, IN 46038 (US); DERRENBERGER, Mike, Arthur, 01748 Hopkinton, Massachusetts (US); BRIDGEWATER, Kevin, Elliott, Indianapolis, IN 46229 (US); HORLANDER, Thomas, Edward, Indianapolis, IN 46220 (US); PERKINS, Russell, W., Carmel, IN 46033-4628 (US)
(74) Representative: Huchet, Anne
(86) International application number: PCT/US2004/007276
(87) International publication number: WO 2004/081744

(56) References cited:
- EP-A- 1 187 391
- EP-A- 1 211 898
- EP-A- 1 265 440
- WO-A-02/29566
- US-A1- 2003 077 074

## Description

### CROSS REFERENCE TO RELATED APPLICATIONS

This application claims priority to and all benefits accruing from two (2) provisional applications filed in the United States Patent and Trademark Office on March 11, 2003, and having assigned serial numbers 60/453,662 and 60/453,764.

### BACKGROUND OF THE INVENTION

### Field of the Invention

The present invention generally relates to digital recording, and more particularly, to a digital recording technique, which provides content protection through the use of digital keys that are unique to specific devices and/or to devices associated with specific household and/or business dwellings.

### Background Information

Personal video recorders (PVRs) are digital recording apparatuses that provide various features such as allowing a user to select, by means of a graphical user interface (GUI) displayed on an associated television set, monitor, or other display device, a television program to be broadcast at a future time or which is currently being broadcast. Such apparatuses digitally record the selected program onto a storage module such as a hard disk, and upon user command, playback the stored program by retrieving it from storage, decompressing or decoding the program and outputting the video signal to an associated television set, monitor, or other display device. Apparatuses having such capabilities may currently be sold under trade names such as "TiVo," "RePlayTV," "Sky+," and "Showstopper."

With digital recording apparatuses such as PVRs, content protection is an important issue. In particular, content protection provides tools and/or methods that protect content such as digital content from being improperly copied, hacked, stolen, and/or reproduced. At present, the issue of content protection for digital recording is in a state of flux as several competing content protection techniques have been proposed. For example, the Electronics Industries Alliance (EIA) has proposed a number of different content protection techniques, which are disclosed in specifications such as EIA-761A, EIA-762, EIA-770, and EIA-775. Despite the existence of such content protection techniques, no single industry wide standard has yet been adopted. Accordingly, the present invention described herein provides yet additional techniques for enabling content protection for digital recording.

Document EP 1 211 898 A2 discloses a content protection scheme for a digital recording device in which the received digital content is encrypted by a key unique to the recording device before being stored in the device. Thus. 10 the playback of the stored content on another recording device will not be possible since the recording device would have a different key.

Document EP1187391A2 discloses a receiver/recorder that has a unique encryption key and upon the recording of a recording medium it generates another encryption key specific for that recording medium. Only an original recorder programmed to execute a special reading method would gain access to the key, and therefore would be able to read the medium.

Document US2003/0077074 discloses a receiver/recorder that has a unique encryption key. When receiving an encrypted program the receiver/recorder will also look at additional data for determining the recording permissions. When recording, the associated permissions will be updated if needed, and the contents will be encrypted with the device unique key. Only the original recording device will be able to decrypt the recorded data.

### SUMMARY OF THE INVENTION

In accordance with an aspect of the present invention, a signal receiving apparatus is disclosed. According to an exemplary embodiment, the signal receiving apparatus comprises input means for receiving signals including specific digital content, memory means for storing a digital key assigned to the signal receiving apparatus and the specific digital content, encryption means for encrypting the specific digital content using the digital key to generate encrypted digital data, and output means for outputting the encrypted digital data to a recording apparatus wherein the input means also receives the digital key from a signal source.

The assigned digital key is preferably unique to the signal receiving apparatus and the specific digital content, so that a recording should not be able to be played back by another apparatus having a different assigned digital key.

In accordance with another aspect of the present invention, a method for enabling digital recording using a signal receiving apparatus and a recording apparatus is disclosed. According to an exemplary embodiment, the signal receiving apparatus performs steps comprising receiving a digital key assigned to specific digital content and the signal receiving apparatus from a signal source, receiving signals including the specific digital content, encrypting the specific digital content using the digital key to generate encrypted digital data, and providing the encrypted digital data to the recording apparatus.

In accordance with yet another aspect of the present invention, a digital recording apparatus is disclosed. According to an exemplary embodiment, the digital recording apparatus comprises an input terminal operative to receive encrypted digital data from an externally connected device. The encrypted digital data is encrypted by a digital key assigned to specific digital content corresponding to the encrypted digital data and one or more devices associated with a particular dwelling including the externally connected device. The one or more devices receive said digital key from a signal source. A memory is operative to record the encrypted digital data.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a configuration for digital recording according to an exemplary embodiment of the present invention;
FIG. 2 is a configuration for digital recording according to another exemplary embodiment of the present invention;
FIG. 3 is a configuration for digital recording according to yet another exemplary embodiment of the present invention;
FIG. 4 is a flowchart illustrating exemplary steps according to one aspect of the present invention; and
FIG. 5 is a flowchart illustrating steps according to another aspect of the present invention.

The exemplifications set out herein illustrate preferred embodiments of the invention, and such exemplifications are not to be construed as limiting the scope of the invention in any manner. Throughout the drawings, like reference numbers may be used to represent the same or similar elements.

### DESCRIPTION OF THE PREFERRED EMBODIMENTS

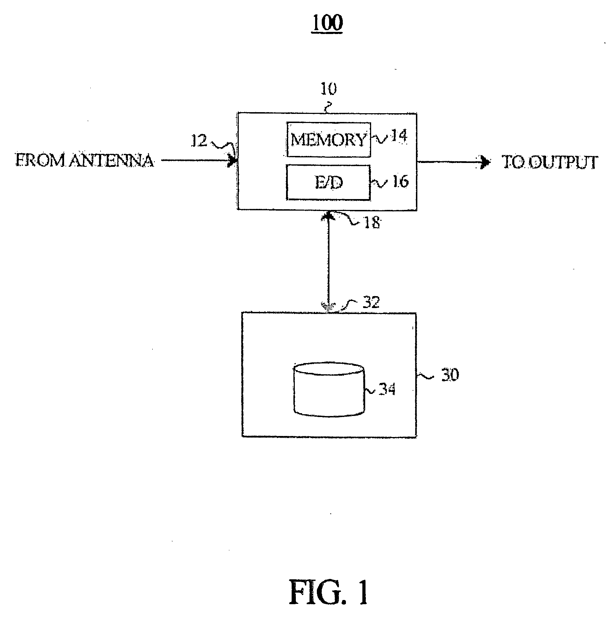

Referring now to the drawings, and more particularly to FIG. 1, a configuration 100 for digital recording according to an exemplary embodiment of the present invention is shown. Configuration 100 comprises signal receiving means such as signal receiving apparatus 10, and digital recording means such as digital recording apparatus 30. In the exemplary embodiment of FIG. 1, signal receiving apparatus 10 and digital recording apparatus 30 represent separate devices.

Signal receiving apparatus 10 is operative to perform various functions including signal receiving and encryption/decryption functions. As indicated in FIG. 1, signal receiving apparatus 10 comprises input means such as input terminal 12, memory means such as memory 14, encryption/decryption (E/D) means such as E/D module 16, and input/output means such as input/output terminal 18. Signal receiving apparatus 10 may be embodied as a device such as a television signal receiver, or a portion thereof. Accordingly, signal receiving apparatus 10 may also include elements such as a tuner, demodulator, processor(s), memory and/or other elements that are not expressly shown in FIG. 1 for clarity of description. Additionally, other conventional elements associated with signal receiving apparatus 10 such as signal transmission lines, control signals, power signals and/or other elements may not be shown in FIG. 1.

Input terminal 12 is operative to receive signals including audio, video, and/or data signals provided from one or more signal sources such as satellite, cable, terrestrial and/or other broadcast sources via a signal receiving element such as an antenna. Memory 14 is operative to store data including one or more digital keys used by signal receiving apparatus 10 for data encryption and/or decryption functions. E/D module 16 is operative to perform data encryption and decryption functions of signal receiving apparatus 10 using the digital key(s) stored in memory 14 to thereby generate digitally encrypted and decrypted data, respectively. Input/output terminal 18 is operative to output and receive data including encrypted digital data to and from digital recording apparatus 30. As indicated in FIG. 1, signal receiving apparatus 10 may also provide other outputs. For example, signal receiving apparatus 10 may output decrypted digital data for ultimate reproduction.

According to an exemplary embodiment, the one or more digital keys stored in memory 14 are assigned to signal receiving apparatus 10. The assigned digital keys are preferably unique, so that digital data encrypted using the digital key(s) can only be decrypted using signal receiving apparatus 10. A particular digital key may be linked to specific content, such as a particular television broadcast program. For example, a particular digital key may be downloaded to signal receiving apparatus 10 and stored in memory 14 prior to when a particular television broadcast program is aired. E/D module 16 may then use the particular digital key to generate encrypted digital data corresponding to the particular television broadcast program which is output via input/output terminal 18 to digital recording apparatus 30 for recording. The encrypted digital data corresponding to the particular television broadcast program may later be retrieved from digital recording apparatus 30, and can only be decrypted by signal receiving apparatus 10. Such content-specific digital keys may be downloaded to signal receiving apparatus 10 on a periodic basis (e.g., to support a unidirectional broadcast environment), and/or may be consumed or disregarded by signal receiving apparatus 10 on an as needed basis.

According to another exemplary embodiment, a unique digital key may be assigned to one or more devices associated with a particular household and/or business dwelling such that digital data encrypted using the digital key can only be decrypted by the one or more devices. In FIG. 1 for example, signal receiving apparatus 10 may represent such a device that is associated with a particular household and/or business dwelling. Any combination of the foregoing embodiments is also within the scope of the present invention.

According to an exemplary embodiment, the digital key(s) may be provided to signal receiving apparatus 10 in various different ways. As previously indicated herein, the digital key(s) may be downloaded to signal receiving apparatus 10. For example, the digital key(s) may be provided from a broadcast source, such as a satellite, cable, terrestrial and/or other broadcast source. With this example, the digital key(s) may be embodied as addressable signals and included with received broadcast signals, and/or may be provided to signal receiving apparatus 10 separately from received broadcast signals. As another example, the digital key may be programmed into memory 14 of signal receiving apparatus 10 during the manufacturing process. As referred to herein, the term "digital key" may refer to an encryption key and/or a decryption key. In particular, if the digital key is a symmetrical key, one key may be used for both encryption and decryption functions. Alternatively, if the digital key is an asymmetrical key, a separate encryption key and decryption key may be required.

In one embodiment, the signal receiving apparatus 10 does not provide a user interface for a user of the signal receiving apparatus 10 to read, enter or modify any digital key. Thus, if a user makes a copy a recording recorded using the signal receiving apparatus 10, the user should not be able to play back the copy using a playback device other than the signal receiving apparatus 10 because the playback device may not have decrypting capability or may have a different digital key assigned to it.

Digital recording apparatus 30 is operative to perform various digital data recording functions. As indicated in FIG. 1, digital recording apparatus 30 comprises input/output means such as input/output terminal 32, and memory means such as memory module 34. According to an exemplary embodiment, input/output terminal 18 of signal receiving apparatus 10 and input/output terminal 32 of digital recording apparatus 30 may be operatively connected via a digital serial bus, such as any version of the known Universal Serial Bus (USB) standard, and/or other type of connection. In this manner, digital recording apparatus 30 may be externally connected to signal receiving apparatus 10 and be used as its data recording/retrieval mechanism. According to an exemplary embodiment, memory module 34 includes a controller element such as a microcontroller, a memory/data storage element such as a hard disk drive (HDD), and/or other elements, which are not expressly shown in FIG. 1 for clarity of description. According to this exemplary embodiment, the microcontroller may be operative to control the recording and retrieval of digital data to and from the HDD, and provide other functions such as data error detection and correction functions.

According to an exemplary embodiment, digital recording apparatus 30 receives encrypted digital data from signal receiving apparatus 10 via input/output terminal 32, and records the encrypted digital data to memory module 34. Upon user command, the recorded encrypted digital data may be retrieved from memory module 34 and provided to signal receiving apparatus 10 for decryption, and ultimately reproduction. As previously indicated herein, the encrypted digital data recorded by digital recording apparatus 30 may be encrypted by a digital key that is unique to signal receiving apparatus 10. In this case, the encrypted digital data can only be decrypted using signal receiving apparatus 10. The digital key may also be shared with one or more devices associated with a particular household and/or business dwelling such that digital data encrypted using the digital key can only be decrypted by the one or more devices. In this case, digital recording apparatus 30 may be moved throughout the particular dwelling and used with other devices provided such devices have received the applicable digital key.

Digital recording apparatus 30 may also provide various other features such as a commercial skip/elimination feature, a pre-loaded content feature that enables a user to view such content multiple times at his/her convenience, a data archival feature that allows a user to store content on an archived device for later use while still protecting the content owner's rights, a subscription-free feature, and/or other features.

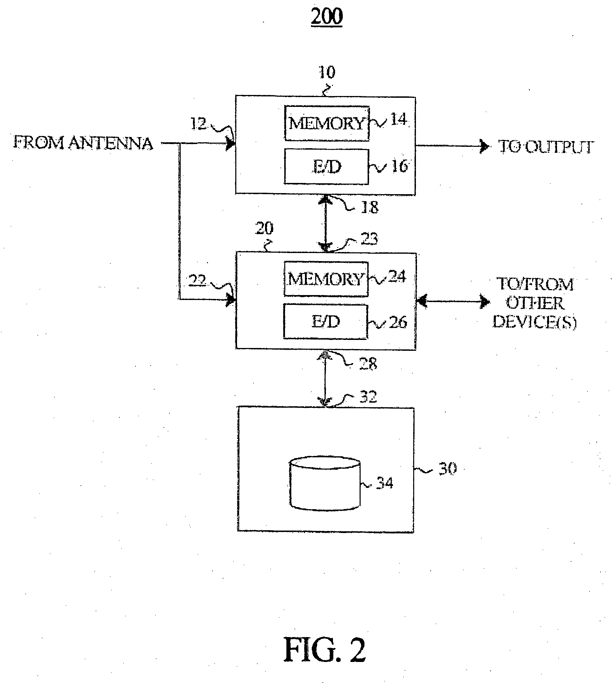

Referring to FIG. 2, a configuration 200 for digital recording according to another exemplary embodiment of the present invention is shown. Configuration 200 comprises signal receiving means such as signal receiving apparatus 10, signal receiving/routing means such as hub 20, and digital recording means such as digital recording apparatus 30. In FIG. 2, signal receiving apparatus 10 and digital recording apparatus 30 may represent the same and/or similar elements as the like numbered elements of FIG. 1, and therefore will not be described again for clarity of description. In the exemplary embodiment of FIG. 2, signal receiving apparatus 10, hub 20, and digital recording apparatus 30 each represent separate devices, which may be operatively connected to each other via a digital serial bus, such as any version of the USB and/or other type of connection.

Hub 20 is operative to perform various functions including signal receiving and routing functions. As indicated in FIG. 2, hub 20 comprises input means such as input terminal 22, first input/output means such as first input/output terminal 23, memory means such as memory 24, E/D means such as E/D module 26, and second input/output means such as first input/output terminal 28. Hub 20 may also include elements such as a tuner, demodulator, processor(s), memory and/or other elements that are not expressly shown in FIG. 2 for clarity of description. Additionally, other conventional elements associated with hub 20 such as signal transmission lines, control signals, power signals and/or other elements may not be shown in FIG. 2.

Input terminal 22 is operative to receive signals including audio, video, and/or data signals provided from one or more signal sources such as satellite, cable, terrestrial and/or other broadcast sources via a signal receiving element such as an antenna. First input/output terminal 23 is operative to output and receive data such as encrypted digital data to and from signal receiving apparatus 10. Memory 24 is operative to store data including one or more digital keys used by hub 20 for data encryption and/or decryption functions. E/D module 26 is operative to perform data encryption and decryption functions of hub 20 using the digital key(s) stored in memory 24 to thereby generate digitally encrypted and decrypted data, respectively. Second input/output terminal 28 is operative to output and receive encrypted digital data to and from digital recording apparatus 30. As indicated in FIG. 2, hub 20 may also include means for outputting and receiving data to and from one or more other devices. For example, hub 20 may output decrypted digital data to such other devices for ultimate reproduction.

According to an exemplary embodiment, hub 20 is also operative to perform the previously described functions of signal receiving apparatus 10. Accordingly, hub 20 is operative to receive signals such as audio, video and/or data signals from one or more signal sources such as satellite, cable, and/or terrestrial broadcast sources via a signal receiving element such as an antenna, and encrypt the received signals using one or more digital keys unique to hub 20 to thereby generate encrypted digital data which may be stored in digital recording apparatus 30. Like the embodiment of FIG. 1, a particular digital key used by hub 20 may be linked to specific content, such as a particular television broadcast program, in the manner previously described herein. Moreover, the digital key(s) used by hub 20 may also be shared with one or more other devices associated with a particular dwelling such that the encrypted digital data generated by hub 20 can only be decrypted using hub 20 and/or the one or more other devices. In FIG. 2 for example, signal receiving apparatus 10 and hub 20 may represent devices that are associated with a particular household and/or business dwelling. Also, like the embodiment of FIG. 1, hub 20 may receive digital key(s) from a broadcast source, and/or by programming a digital key into memory 24 during the manufacturing process.

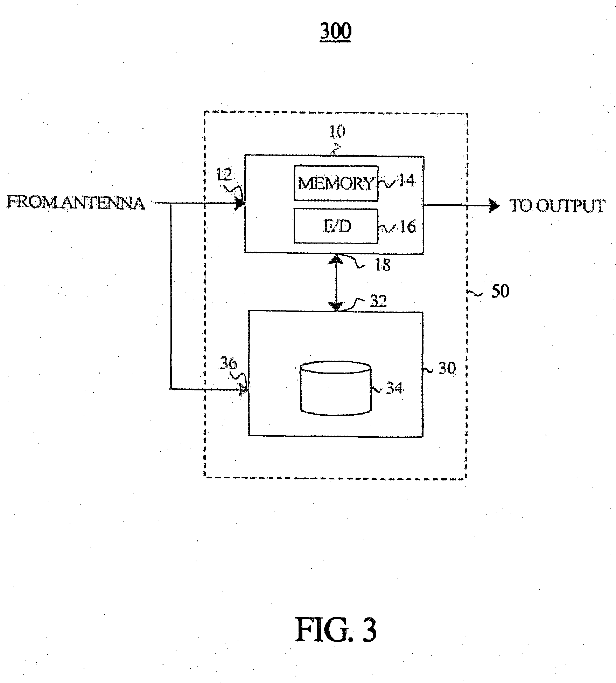

Referring to FIG. 3, a configuration 300 for digital recording according to yet another exemplary embodiment of the present invention is shown. In FIG. 3, configuration 300 comprises signal receiving means such as signal receiving apparatus 10, and digital recording means such as digital recording apparatus 30. In FIG. 3, signal receiving apparatus 10, digital recording apparatus 30 and their respective elements may represent the same and/or similar elements as the like numbered elements of FIGS. 1 and 2, but are integrated together into a single device 50.

In FIG. 3, both signal receiving apparatus 10 and digital recording apparatus 30 may receive signals such as audio, video and/or data signals from one or more signal sources such as satellite, cable, and/or terrestrial broadcast sources via a signal receiving element such as an antenna. Moreover, since signal receiving apparatus 10 and digital recording apparatus 30 are integrated into a single device 50, they both share one or more digital keys that may be unique to device 50. Like the previously described exemplary embodiments, a particular digital key used by device 50 may be linked to specific content, such as a particular television broadcast program, in the manner previously described herein. Moreover, the digital key(s) used by device 50 may also be shared with one or more other devices associated with a particular dwelling such that the encrypted digital data generated by device 50 can only be decrypted using device 50 and/or the one or more other devices. Also, like the embodiments of FIGS. 1 and 2, device 50 may receive digital key(s) from a broadcast source, and/or by programming a digital key into memory 14 and/or 34 during the manufacturing process.

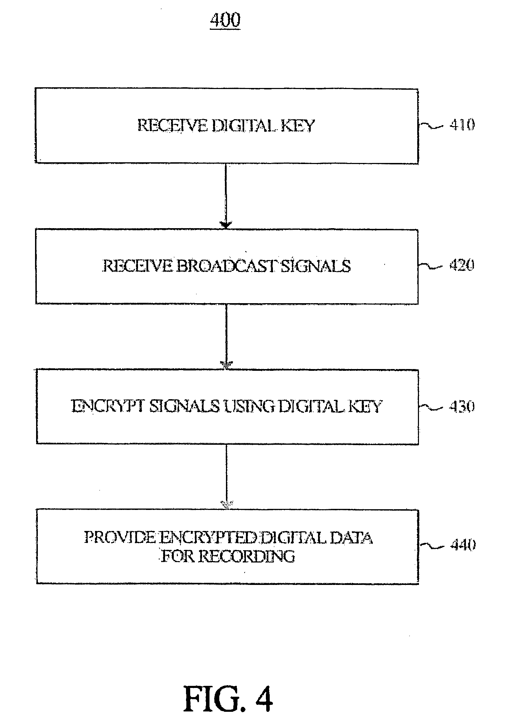

To facilitate a better understanding of the inventive concepts of the present invention, an example will now be provided. Referring to FIG. 4, a flowchart 400 illustrating exemplary steps according to one aspect of the present invention is shown. For purposes of example and explanation, the steps of FIG. 4 will be described with reference to the previously described exemplary embodiment shown in FIG. 1. The steps of FIG. 4 are merely exemplary, and are not intended to limit the present invention in any manner.

At step 410, signal receiving apparatus 10 receives a digital key and stores the digital key in memory 14. As previously indicated herein, signal receiving apparatus 10 may receive the digital key at step 410 in various different ways such as from a broadcast source, and/or by programming the digital key into memory 14 during the manufacturing process. The digital key is unique to signal receiving apparatus 10 and/or one or more other devices associated with a particular dwelling. The digital key may also be linked to specific content, such as a particular television broadcast program.

At step 420, signal receiving apparatus 10 receives signals such as audio, video, and/or data signals from one or more signal sources such as satellite, cable, terrestrial and/or other broadcast sources via a signal receiving element such as an antenna and input terminal 12.

At step 430, E/D module 16 of signal receiving apparatus 10 encrypts the signals received at step 420 using the digital key received at step 410 to thereby generate encrypted digital data. Since the digital key is unique to signal receiving apparatus 10 and/or one or more other devices associated with a particular dwelling, the encrypted digital data generated at step 430 can only be later decrypted by signal receiving apparatus 10 and/or the one or more other devices.

At step 440, signal receiving apparatus 10 provides the encrypted digital data generated at step 430 to digital recording apparatus 30 for recording via input/output terminal 18. According to an exemplary embodiment, the encrypted digital data may be provided to digital recording apparatus 30 at step 440 using a digital serial bus, such as any version of the USB and/or other type of connection.

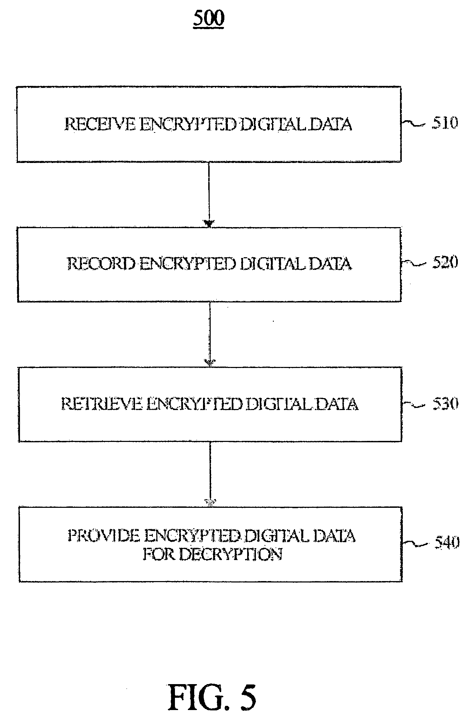

Referring now to FIG. 5, a flowchart 500 illustrating exemplary steps according to another aspect of the present invention is shown. For purposes of example and explanation, the steps of FIG. 5 will also be described with reference to the previously described exemplary embodiment of FIG. 1. The steps of FIG. 5 are merely exemplary, and are not intended to limit the present invention in any manner.

At step 510, digital recording apparatus 30 receives the encrypted digital data from signal receiving apparatus 10. According to an exemplary embodiment, the encrypted digital data received at step 510 is the encrypted digital data provided by signal receiving apparatus 10 at step 440 of Fig. 4.

At step 520, digital recording apparatus 30 records the encrypted digital data to memory module 34. According to an exemplary embodiment, the microcontroller of memory module 34 enables the encrypted digital data to be recorded to the HDD of memory module 34 at step 520, and may perform functions including data error detection and correction functions.

At step 530, digital recording apparatus 30 retrieves the encrypted digital data from memory module 34. According to an exemplary embodiment, the microcontroller of memory module 34 enables the encrypted digital data to be retrieved from the HDD of memory module 34 at step 530, and may again perform functions including data error detection and correction functions. Step 530 may for example be performed responsive to a user input to signal receiving apparatus 10. This user input may cause signal receiving apparatus 10 to output a retrieval command to digital recording apparatus 30 which initiates step 530.

At step 540, digital recording apparatus 30 provides the encrypted digital data to signal receiving apparatus 10 for decryption via E/D module 16, and subsequent reproduction. According to an exemplary embodiment, the encrypted digital data may be provided to signal receiving apparatus 10 at step 540 via a digital serial bus, such as any version of the USB and/or other type of connection.

As described herein, the present invention provides a digital recording technique, which provides content protection through the use of digital keys that are unique to specific devices and/or to devices associated with specific household and/or business dwellings. The present invention may be applicable to various apparatuses, either with or without a display device. Accordingly, the phrases "signal receiving apparatus" and "television signal receiver" as used herein may refer to various different systems or apparatuses including, but not limited to, television sets, computers and/or monitors that include a display device, and systems or apparatuses such as set-top boxes, video cassette recorders (VCRs), digital versatile disk (DVD) players, video game boxes, computers or other apparatuses that may not include a display device.

While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A signal receiving apparatus (10, 20), comprising:
input means (12, 22) for receiving signals including specific digital content;
memory means (14, 24) for storing a digital key assigned to said specific digital content and to said signal receiving apparatus (10, 20);
encryption means (1 6, 26) for encrypting said specific digital content using said digital key to generate encrypted digital data; and
output means (1 8, 28) for outputting said encrypted digital data to a recording apparatus (30);
**characterized in that**
said signal receiving apparatus is configured to receive said digital key only from an external signal source.

2. The signal receiving apparatus (10, 20) of claim 1, wherein said encrypted digital data can not be decrypted by other signal receiving apparatus having assigned a different digital key.

3. The signal receiving apparatus (10, 20) of claim 1, wherein said recording apparatus (30) is connected to said signal receiving apparatus (10, 20) via a digital serial bus.

4. The signal receiving apparatus (10, 20) of claim 1, wherein said signal receiving apparatus does not include a user interface for a user to modify the digital key.

5. A method (400/500) for enabling digital recording using a signal receiving apparatus and a recording apparatus, wherein said signal receiving apparatus performs steps comprising:
receiving signals including a specific digital content (420);
receiving, only from an external signal source, a digital key assigned to said specific digital content and to said signal receiving apparatus (10, 20);
encrypting said specific digital content using said digital key to generate encrypted digital data (430); and
providing said encrypted digital data to said recording apparatus (440).

6. The method (400/500) of claim 5, wherein said recording apparatus performs steps comprising:
receiving said encrypted digital data from said signal receiving apparatus (510);
recording said encrypted digital data to a memory (520);
retrieving said encrypted digital data from said memory (530); and
providing said encrypted digital data to said signal receiving apparatus (540).

7. The method (400/500) of claim 5, wherein said encrypted digital data cannot be decrypted by other signal receiving apparatus having assigned a different digital key.

8. The method (400/500) of claim 5, wherein said signal receiving apparatus and said recording apparatus are integrated into a single device.

9. The method (400/500) of claim 5, wherein said signal receiving apparatus is externally connected to said recording apparatus.

10. The method (400/500) of claim 9, wherein said signal receiving apparatus is connected to said recording apparatus via a digital serial bus.

11. The method (400/500) of claim 5, wherein said signal receiving apparatus does not include a user interface for a user to modify the digital key.

## Patentansprüche

1. Signalempfangsvorrichtung (10, 20), die umfasst:
ein Eingabemittel (12, 22) zum Empfangen von Signalen, die einen spezifischen digitalen Inhalt enthalten;
ein Speichermittel (14, 24) zum Speichern eines digitalen Schlüssels, der dem spezifischen digitalen Inhalt und der Signalempfangsvorrichtung (10, 20) zugewiesen ist;
ein Verschlüsselungsmittel (16, 26) zum Verschlüsseln des spezifischen digitalen Inhalts unter Verwendung des digitalen Schlüssels, um verschlüsselte digitale Daten zu erzeugen; und
ein Ausgabemittel (18, 28) zum Ausgeben der verschlüsselten digitalen Daten an eine Aufzeichnungsvorrichtung (30) ;
**dadurch gekennzeichnet, dass**
die Signalempfangsvorrichtung dafür konfiguriert ist, den digitalen Schlüssel nur von einer externen Signalquelle zu empfangen.

2. Signalempfangsvorrichtung (10, 20) nach Anspruch 1, wobei die verschlüsselten digitalen Daten durch eine andere Signalempfangsvorrichtung, der ein anderer digitaler Schlüssel zugewiesen worden ist, nicht entschlüsselt werden können.

3. Signalempfangsvorrichtung (10, 20) nach Anspruch 1, wobei die Aufzeichnungsvorrichtung (30) über einen digitalen seriellen Bus mit der Signalempfangsvorrichtung (10, 20) verbunden ist.

4. Signalempfangsvorrichtung (10, 20) nach Anspruch 1, wobei die Signalempfangsvorrichtung keine Nutzerschnittstelle für einen Nutzer zum Ändern des digitalen Schlüssels enthält.

5. Verfahren (400/500), um unter Verwendung einer Signalempfangsvorrichtung und einer Aufzeichnungsvorrichtung eine digitale Aufzeichnung zu ermöglichen, wobei die Signalempfangsvorrichtung Schritte ausführt, die umfassen:
Empfangen von Signalen, die einen spezifischen digitalen Inhalt enthalten (420);
Empfangen eines digitalen Schlüssels, der dem spezifischen digitalen Inhalt und der Signalempfangsvorrichtung (10, 20) zugewiesen ist, nur von einer externen Signalquelle;
Verschlüsseln des spezifischen digitalen Inhalts unter Verwendung des digitalen Schlüssels, um verschlüsselte digitale Daten zu erzeugen (430); und
Bereitstellen der verschlüsselten digitalen Daten für die Aufzeichnungsvorrichtung (440).

6. Verfahren (400/500) nach Anspruch 5, wobei die Aufzeichnungsvorrichtung Schritte ausführt, die umfassen:
Empfangen der verschlüsselten digitalen Daten von der Signalempfangsvorrichtung (510);
Aufzeichnen der verschlüsselten digitalen Daten in einem Speicher (520);
Abrufen der verschlüsselten digitalen Daten aus dem Speicher (530); und
Bereitstellen der verschlüsselten digitalen Daten für die Signalempfangsvorrichtung (540).

7. Verfahren (400/500) nach Anspruch 5, wobei die verschlüsselten digitalen Daten durch eine andere Signalempfangsvorrichtung, der ein anderer digitaler Schlüssel zugewiesen worden ist, nicht entschlüsselt werden können.

8. Verfahren (400/500) nach Anspruch 5, wobei die Signalempfangsvorrichtung und die Aufzeichnungsvorrichtung in einer einzigen Vorrichtung integriert sind.

9. Verfahren (400/500) nach Anspruch 5, wobei die Signalempfangsvorrichtung mit der Aufzeichnungsvorrichtung extern verbunden ist.

10. Verfahren (400/500) nach Anspruch 9, wobei die Signalempfangsvorrichtung über einen digitalen seriellen Bus mit der Aufzeichnungsvorrichtung verbunden ist.

11. Verfahren (400/500) nach Anspruch 5, wobei die Signalempfangsvorrichtung keine Nutzerschnittstelle für einen Nutzer zum Ändern des digitalen Schlüssels enthält.

## Revendications

1. Un appareil de réception de signaux (10, 20), comprenant :
un dispositif d'entrée (12, 22) pour recevoir des signaux comprenant du contenu numérique spécifique, un dispositif de mémorisation (14, 24) pour stocker une clé numérique attribuée audit contenu numérique spécifique et audit appareil de réception de signaux (10, 20) ;
un moyen de chiffrement (1 6, 26) permettant de chiffrer ledit contenu numérique spécifique à l'aide de ladite clé numérique pour générer les données numériques chiffrées ; et
un dispositif de sortie (1, 8, 28) pour émettre lesdites données numériques chiffrées vers un appareil d'enregistrement (30) ;
**caractérisé en ce que**
ledit appareil de réception de signaux est configuré pour recevoir ladite clé numérique à partir d'une source de signal externe.

2. L'appareil de réception de signaux (10, 20) selon la revendication 1, dans lequel lesdites données numériques chiffrées ne peuvent pas être déchiffrées par un autre appareil de réception de signaux ayant une clé numérique différente attribuée.

3. L'appareil de réception de signaux (10, 20) selon la revendication 1, dans lequel ledit appareil d'enregistrement (30) est connecté audit appareil de réception de signaux (10, 20) via un bus série numérique.

4. L'appareil de réception de signaux (10, 20) selon la revendication 1, dans lequel ledit appareil de réception de signaux ne comprend pas d'interface utilisateur permettant à un utilisateur de modifier la clé numérique.

5. Procédé (400/500) permettant d'activer l'enregistrement numérique à l'aide d'un appareil de réception de signaux et d'un appareil d'enregistrement, dans lequel ledit appareil de réception de signaux effectue les étapes suivantes :
la réception de signaux incluant un contenu numérique spécifique (420) ;
la réception, depuis une source de signaux externe, d'une clé numérique attribuée audit contenu numérique spécifique et audit appareil de réception de signaux (10, 20) ; le chiffrement dudit contenu numérique spécifique à l'aide de ladite clé numérique pour générer des données numériques chiffrées (430) ; et l'envoi desdites données numériques chiffrées audit appareil d'enregistrement (440). Procédé (400/500) selon la revendication 5,
dans laquelle ledit appareil d'enregistrement effectue les étapes suivantes :
la réception desdites données numériques chiffrées à partir dudit appareil de réception de signaux (510) ;
l'enregistrement desdites données numériques chiffrées dans une mémoire (520) ;
la récupération desdites données numériques chiffrées à partir de ladite mémoire (530) ; et
l'envoi desdites données numériques chiffrées vers ledit appareil de réception de signaux (540).

6. Procédé (400/500) selon la revendication 5, dans laquelle lesdites données numériques chiffrées ne peuvent pas être déchiffrées par un autre appareil de réception de signaux ayant une clé numérique différente attribuée.

7. Procédé (400/500) selon la revendication 5, dans laquelle ledit appareil de réception de signaux et ledit appareil d'enregistrement sont intégrés dans un dispositif unique.

8. Procédé (400/500) selon la revendication 5, dans laquelle ledit appareil de réception de signaux est connecté de manière externe audit appareil d'enregistrement.

9. Procédé (400, 500) selon la revendication 9, dans laquelle ledit appareil de réception de signaux est connecté audit appareil d'enregistrement via un bus série numérique.

10. Procédé (400, 500) selon la revendication 5, dans laquelle ledit appareil de réception de signaux ne comprend pas d'interface utilisateur permettant à un utilisateur de modifier la clé numérique.

11. Procédé (400, 500) selon la revendication 5, dans laquelle ledit appareil de réception de signaux ne comprend pas d'interface utilisateur permettant à un utilisateur de modifier la clé numérique.
